# EUROPÄISCHE PATENTANMELDUNG

(11) **EP 1 575 241 A1**
(43) Veröffentlichungstag der Anmeldung: **14.09.2005**
(21) Anmeldenummer: 04005762.2
(22) Anmeldetag: 11.03.2004
(51) Int. Cl.: H04L 29/08, H04L 29/06

(54) **Multimedia-Gateway für IP Version 4 und IP Version 6 Netze**

(71) Anmelder: SIEMENS AKTIENGESELLSCHAFT, 80333 München (DE)
(72) Erfinder: Kleiner, Patrick, 81476 München (DE); Vizae, Mohammad, 1220 Wien (AT); Zinkl, Walter, 1100 Wien (AT)
(74) Vertreter: Berg, Peter

(57) **Zusammenfassung**

Die Erfindung betrifft ein Multimedia-Gateway zur Verbindung von einem ersten Computernetz mit einem nicht kompatiblen zweiten Computernetz mit folgenden Komponenten:
- einem ersten Funktionsblock zum Aufbau einer Multimedia-Datenübertragung mit Teilnehmern des ersten Computernetzes entsprechend den spezifischen Protokollen dieses Netzes, wobei Nutzdaten und Signalisierungsdaten samt Leistungsmerkmalen getrennt in jeweils zugeordneten ersten signalisierungsspezifischen zustandsempfindlichen Stapelspeichern zwischengespeichert werden,
- einem zweiten Funktionsblock zum Aufbau einer Multimedia-Datenübertragung mit Teilnehmern des zweiten Computernetzes entsprechend den spezifischen Protokollen dieses Netzes, wobei Nutzdaten und Signalisierungsdaten samt Leistungsmerkmalen getrennt in jeweils zugeordneten zweiten signalisierungsspezifischen zustandsempfindlichen Stapelspeichern zwischengespeichert werden, und - einem dritten Funktionsblock zur Umsetzung der Signalisierungsdaten samt Leistungsmerkmalen und der Nutzdaten zwischen erstem Funktionsblock und zweitem Funktionsblock.

## Beschreibung

Die Erfindung betrifft ein Multimedia - Gateway zur Verbindung von nicht kompatiblen Computernetzen.

In den letzten Jahren haben sich Computernetzwerke zu einem bedeutenden Kommunikationsmedium entwickelt, über welches eine Vielzahl von Diensten angeboten wird. Das weltweit bekannteste Computernetzwerk ist das Internet, wie die Gesamtheit aller miteinander verbundenen und das Internet Protokoll IP als Transportprotokoll nutzenden Netze bezeichnet wird.

Das Internet Protokoll IP ist auf Ebene 3 des OSI-Schichtenmodells für den verbindungslosen Transport von Daten von einem Sender - gegebenenfalls über mehrere Netze - zum Empfänger zuständig, wobei weder Fehlererkennung noch Fehlerkorrektur erfolgt.

Auf dem Internet Protokoll setzen Transport Protokolle wie das Transmission Control Protocol TCP oder User Datagram Protocol UDP auf, und darauf wiederum eine kaum überschaubare Vielfalt von unterschiedlichen, zum Teil miteinander konkurrierenden Anwendungsprotokollen wie z.B. http, FTP oder für das Management von multimedialen Verbindungen das sogenannte SIP-Protokoll.

Große Bedeutung kommt daher den Gateways zu, die an den Schnittstellen zwischen den einzelnen nichtkompatiblen Netzen Protokolldateneinheiten übersetzen.

Der Erfindung liegt die Aufgabe zugrunde, ein Gateway für Multimedia-Kommunikation anzugeben.

Diese Aufgabe wird erfindungsgemäß gelöst mit einem Multimedia-Gateway zur Verbindung von einem ersten Computernetz mit einem nicht kompatiblen zweiten Computernetz mit folgenden Komponenten:
- einem ersten Funktionsblock zum Aufbau einer Multimedia-Datenübertragung mit Teilnehmern des ersten Computernetzes entsprechend den spezifischen Protokollen dieses Netzes, wobei Nutzdaten und Signalisierungsdaten samt Leistungsmerkmalen getrennt in jeweils zugeordneten ersten signalisierungsspezifischen zustandsempfindlichen Stapelspeichern zwischengespeichert werden,
- einem zweiten Funktionsblock zum Aufbau einer Multimedia-Datenübertragung mit Teilnehmern des zweiten Computernetzes entsprechend den spezifischen Protokollen dieses Netzes, wobei Nutzdaten und Signalisierungsdaten samt Leistungsmerkmalen getrennt in jeweils zugeordneten zweiten signalisierungsspezifischen zustandsempfindlichen Stapelspeichern zwischengespeichert werden, und
- einem dritten Funktionsblock zur Umsetzung der Signalisierungsdaten samt Leistungsmerkmalen und der Nutzdaten zwischen erstem Funktionsblock und zweitem Funktionsblock.

Das erfindungsgemäße Gateway zeichnet sich durch besonders hohe Flexibilität und vielseitige Einsatzmöglichkeiten aus.

Vorteilhaft ist es, wenn das erste Computernetzwerk auf dem Internet Protokoll Version 6 beruht und der erste Funktionsblock dieses Protokoll unterstützt, und wenn das zweite Computernetzwerk auf dem Internet Protokoll Version 4 beruht und der zweite Funktionsblock dieses Protokoll verwendet und dass der dritte Funktionsblock die Umsetzung der Protokolldaten durchführt.

So kann mit dem erfindungsgemäßen Multimedia-Gateway die Interworking Funktionalität zwischen IP-Netzen Version 4 und IP-Netzen der Version 6 unter Beibehaltung der Leistungsmerkmale realisiert werden.

Ein besonders vorteilhafter Einsatzfall ist dann gegeben, wenn die Multimedia-Datenübertragung im ersten Computernetzwerk nach dem Session Initiation Protokoll SIP erfolgt und der erste Funktionsblock als SIP-Proxy dieses Protokoll unterstützt und der zweite Funktionsblock im zweiten Computernetzwerk als Teilnehmer an einer Multimedia-Datenübertragung nach dem H.323 - Standard eingerichtet ist und dass der dritte Funktionsblock die Signalisierungsdaten nach dem Session Initiation Protokoll SIP und die enthaltenen Leitungsmerkmale in Signalisierungsdaten nach dem H.323 - Standard umsetzt, wobei die Leistungsmerkmale gemäß Standard H.323 und H.450 umgesetzt werden.

Für Multimedia-Verbindungen im Internet existieren derzeit zwei konkurrierende Standards für die Signalisierung: H.323 und SIP. Der ITU-Standard H.323 (ITU: International Telecommunication Union) wurde für die Echtzeitübertragung von Multimediaapplikationen wie Sprach- und Videokommunikation in paketorientierten Netzen entwickelt. Als so genannter Umbrella-Standard beherbergt er eine Reihe von Protokollen, etwa für Signalisierung, Austausch von Endgerätefunktionalitäten und Statusinformationen sowie zur Verbindungs- und Datenflusskontrolle. Zu den wichtigsten Protokollen des H.323-Standards zählen H.225, H.245 und H.450.x. H.225 beschreibt Signalisierungsprotokolle wie RAS (Registration, Admission, Status) und Call Signaling. H.245 fungiert als Control Protocol for Multimedia Communication. Der H.450-Standard definiert zusätzliche Telefoniefunktionen, um beispielsweise die Leistungsmerkmale von ISDN auf IP abzubilden.

Das Session Initiation Protocol SIP wurde von der IETF (Internet Engineering Task Force) entwickelt. Der Standard definiert ein Signalisierungsprotokoll zum Aufbauen, Modifizieren und Beenden von Sitzungen mit zwei oder mehr Teilnehmern. Das Session Initiation Protocol SIP dient ebenfalls der Übertragung von Echtzeitdaten über paketgestützte Netze und ist funktional mit den Protokollen gemäß ITU-Standard H.323 vergleichbar: Das Session Initiation Protocol SIP kann interaktive Kommunikationsdienste einschließlich Sprache über IP-Netze vermitteln, der Transport funktioniert über TCP (Transmission Control Protocol) oder UDP (User Datagram Protocol). Dabei ist das Session Initiation Protocol SIP verantwortlich für die Gesprächssignalisierung sowie die Lokalisierung und Registrierung von Anwendern. Insbesondere ermöglicht es aber auch die Übermittlung der Identität des Anrufers sowie die Anrufweiterleitung in IP-Netzen. Das Session Initiation Protocol SIP ist textorientiert, basiert auf HTTP (Hypertext Transfer Protocol) und bietet damit eine offene internetbasierende Struktur. Aus diesem Grund lassen sich neue Leistungsmerkmale relativ einfach und schnell implementierten.

Ein weiterer wesentlicher Standard für Multimediaverbindungen ist das Media Gateway Controller Protokoll MGCP, welches Telefonie zwischen dem Internet und dem herkömmlichen Telefonnetz unterstützt und dafür ein Verbindungssteuerungsprotokoll (kein Signalisierungsprotokoll) bereitstellt. Zur Übertragung der MGCP-Steuerbefehle können als Protokoll sowohl der H.323 Standard als auch das Session Initiation Protocol SIP eingesetzt werden.

Die Erfindung ist dabei auch vorteilhaft einsetzbar zur Umsetzung von Protokolldaten nach dem H.323 Standard als auch nach dem Session Initiation Protocol SIP in MGCP-Steuerbefehle.

Günstig ist daher insbesondere der Einsatz eines erfindungsgemäßen Multimedia-Gateways bei dem die Multimedia-Datenübertragung im ersten Computernetzwerk nach dem H.323-Standard erfolgt und der erste Funktionsblock als H.323 Gatekeeper dieses Protokoll unterstützt und der zweite Funktionsblock im zweiten Computernetzwerk als Teilnehmer an einer Multimedia-Datenübertragung nach dem Media Gateway Controller Protokoll MGCP-Standard eingerichtet ist und bei der dritte Funktionsblock die Signalisierungsdaten nach dem H.323/H.450-Protokollen und die enthaltenen Leitungsmerkmale in Verbindungssteuerungsdaten nach dem MGCP-Standard umsetzt.
Günstig ist weiterhin der Einsatz eines erfindungsgemäßen Multimedia-Gateways bei dem die Multimedia-Datenübertragung im ersten Computernetzwerk nach dem Session Initiation Protokoll SIP erfolgt und der erste Funktionsblock als SIP Proxy dieses Protokoll unterstützt und der zweite Funktionsblock im zweiten Computernetzwerk als Teilnehmer an einer Multimedia-Datenübertragung nach dem Media Gateway Controller Protokoll MGCP-Standard eingerichtet ist und bei dem der dritte Funktionsblock die Signalisierungsdaten nach dem Session Initiation Protokoll SIP und die enthaltenen Leitungsmerkmale in Verbindungssteuerungsdaten nach dem MGCP-Standard umsetzt.

Die Erfindung wird anhand eines in der Fig. schematisch dargestellten Ausführungsbeispieles näher erläutert.

Das Beispiel zeigt den Einsatz eines erfindungsgemäßen Gateways bei einem Übergang von einer ersten Internetdomain, welche Internet Protokoll Version 6 IPv6 sowie unter anderem das Session Initiation Protocol SIP nutzt, zu einer zweiten Internetdomain, welche auf Internet Protokoll Version 4 Ipv4 und dem ITU-Standard H.323 aufbaut.

Gezeigt wird ein Rufaufbau zwischen einem Teilnehmer der ersten Domain und einem Teilnehmer der zweiten Domain. Der Begriff Domain bezeichnet dabei einen streng abgegrenzten adressierbaren Bereich eines Computernetzes, bei dem es sich beispielsweise um ein sogenanntes Intranet oder aber auch um das gesamte Netz eines Betreibers handeln kann.

Erfindungsgemäß wird nun der Ruf durch das Multimedia-Gateway trotz der unterschiedlichen Bedingungen in den beiden nicht kompatiblen Domains in einer Weise umgesetzt, dass die beiden Teilnehmer den vollen Leistungsumfang, der in beiden Netzen geboten wird, auch über die Netzgrenzen hinweg nutzen können.

### Der dazugehörige Ablauf ist wie folgt:

Die Einleitung eines Rufes erfolgt nach dem Session Initiation Protocol SIP mit der Anforderung INVITE, die bei einer Zieladresse in der zweiten Domain an das Gateway gerouted wird. Der Routingvorgang wird entsprechend dem Internet Protokoll IP und den Transport Protokollen, Transmission Control Protocol TCP oder User Datagram Protocol UDP durchgeführt. Beim gegenständlichen Beispiel weisen die beiden Domains unterschiedliche Versionen des Internet Protokolls - Internet Protokoll Version 6 IPv6 bzw. Internet Protokoll Version 6 Ipv4 - mit unterschiedlicher Adressierung auf, sodass im erfindungsgemäßen Gateway ein Adresstransfer erfolgen muss.

Erfindungsgemäß werden im ersten Funktionsblock PHY:1; IPv6; Ipv6 SIP; IPv6.RTP die Daten für das Session Initiation Protocol SIP von den Daten gemäß Real time Protokoll RTP getrennt. Der RTP-Datenstrom wird im ersten Funktionsblock zwischengespeichert, es findet eine Umsetzung der Inter Protokolldaten von Version 6 auf Version 4 statt, insbesondere der wesentliche Unterschied der Adressierung wird durch Network Adress Translation überwunden.

In Bezug auf die Signalisierungsdaten nach dem SIP-Protokoll verhält sich der erste Funktionsblock PHY:1; IPv6; Ipv6 SIP; IPv6.RTP nach Art eines USER AGENT SERVER, der den ankommenden Ruf protokollgerecht abschließt, d.h. den Signalisierungshandshake und Nutzdaten (Sprache, Video, Multimediale Inhalte) protokollgerecht durchführt. Die dazu notwendigen Informationen werden in einem signalisierungsspezifischen zustandsempfindlichen Signalisierungsstapelspeicher zwischengespeichert.

Diese Information dient einerseits dem ordnungsgemäßen Dialog mit dem rufenden Teilnehmer aus der ersten Domain, andererseits werden die Daten dazu verwendet um mittels drittem Funktionsblock die Signalisierung in das H.323-Protokoll zu übersetzen.

Die solcherart erhaltenen H.323-Protokolldaten werden an den zweiten signalisierungsspezifischen zustandsempfindlichen Signalisierungsstapelspeicher Ipv4 H.323; des zweiten Funktionsblockes PHY:2; IPv4; IPv4 H.323; IPv4.RTP übergeben und dienen als Basis für die Kommunikation zwischen zweitem Funktionsblock und angerufenen Teilnehmer des zweiten Netzes.

Die erfindungsgemäße Transformation der Signalisierung wird auch dazu verwendet, um Leistungsmerkmale zu übersetzen.

Als Leistungsmerkmale bezeichnet man Funktionalitäten eines Endgerätes, welche beispielsweise die Bedienung desselben erleichtern und vereinfachen sollen oder aber die Kommunikationsmöglichkeiten erweitern sollen.

Beispiele dafür sind
- Anrufweiterleitung
- Anklopfen
- Dreierkonferenz
- Rufnummernanzeige
- Automatischer Rückruf

Nach der Erfindung werden auch derartige Leistungsmerkmale beispielsweise aus dem Session Initiation Protocol SIP in das beim H.323-Standard dafür vorgesehene H.450-Protokoll übersetzt. Diese Übersetzung erfolgt auf "intelligente" Weise, d.h. es ist vorgesehen, dass einzelne Informationen, die der sendende Standard nicht vollständig liefert, im dritten Funktionsblock ALG selbständig ergänzt werden. Erfindungsgemäß werden diese Leistungsmerkmale auf einer ,Gateway-Hälfte' abgeschlossen und an die anderen ,Gateway-Hälfte' umgesetzt, d.h. der Signalisierungsverkehr mit dem ersten Teilnehmer nach dem Session Initiation Protocol SIP nach Art eines SIP-Teilnehmers ordnungsgemäß abgeschlossen und auf der "Ausgangsseite in der zweiten Domain ein Ruf nach dem H.323 bzw. H.450- Protokoll aufgebaut.

Das Ausführungsbeispiel beschreibt lediglich einen Ruf von der ersten Domain in die zweite Domain. In analoger Weise werden aber auch Rufe in die andere Richtung d.h. von einem Netz mit Internet Protokoll Version 4 und H.323-Standard in ein Netz mit Internet Protokoll Version 6 und Session Initiation Protocol SIP umgesetzt.

Die Erfindung ist zwar vorteilhaft bei den bislang angeführten Protokolle IPv4, Ipv6, SIP, H. 323 MGCP, MEGACO (H.248) einsetzbar, aber nicht darauf beschränkt, das erfindungsgemäße Multimedia- Gateway eignet sich grundsätzlich als Schnittstelle zur Herstellung der Interoperabilität für nicht kompatible Computernetze.

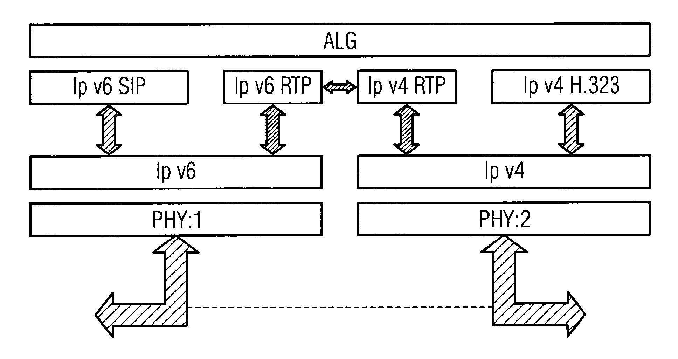

## Patentansprüche

1. Multimedia-Gateway zur Verbindung von einem ersten Computernetz mit einem nicht kompatiblen zweiten Computernetz mit folgenden Komponenten:
- einem ersten Funktionsblock (PHY:1; IPv6; IPv6 SIP; IPv6.RTP) zum Aufbau einer Multimedia-Datenübertragung mit Teilnehmern des ersten Computernetzes entsprechend den spezifischen Protokollen dieses Netzes, wobei Nutzdaten und Signalisierungsdaten samt Leistungsmerkmalen getrennt in jeweils zugeordneten ersten signalisierungsspezifischen zustandsempfindlichen Stapelspeichern (Ipv6 SIP; IPv6.RTP) zwischengespeichert werden,
- einem zweiten Funktionsblock (PHY:2; IPv4; IPv4 H.323; IPv4.RTP) zum Aufbau einer Multimedia-Datenübertragung mit Teilnehmern des zweiten Computernetzes entsprechend den spezifischen Protokollen dieses Netzes, wobei Nutzdaten und Signalisierungsdaten samt Leistungsmerkmalen getrennt in jeweils zugeordneten zweiten signalisierungsspezifischen zustandsempfindlichen Stapelspeichern (IPv4 H.323; IPv4.RTP) zwischengespeichert werden, und - einem dritten Funktionsblock (ALG) zur Umsetzung der Signalisierungsdaten samt Leistungsmerkmalen und der Nutzdaten zwischen erstem Funktionsblock und zweitem Funktionsblock (PHY:2; IPv4; Ipv4 SIP; IPv4.RTP).

2. Multimedia-Gateway nach Anspruch 1, **dadurch gekennzeichnet, dass** das ersten Computernetzwerk auf dem Internet Protokoll Version 6 (IPv6) beruht und der erste Funktionsblock (PHY:1; IPv6; Ipv6 SIP; IPv6.RTP)dieses Protokoll unterstützt, dass das zweite Computernetzwerk auf dem Internet Protokoll Version 4 (IPv4) beruht und der zweite Funktionsblock dieses Protokoll verwendet und dass der dritte Funktionsblock die Umsetzung der Protokolldaten durchführt.

3. Multimedia-Gateway nach Anspruch 1 oder 2, **dadurch gekennzeichnet, dass** die Multimedia-Datenübertragung im ersten Computernetzwerk nach dem Session Initiation Protokoll SIP erfolgt und der erste Funktionsblock(PHY:1; IPv6; IPv6 SIP; IPv6.RTP) als SIP-Proxy dieses Protokoll unterstützt und der zweite Funktionsblock (PHY:2; IPv4; IPv4 H.323; IPv4.RTP) im zweiten Computernetzwerk als Teilnehmer an einer Multimedia-Datenübertragung nach dem H.323 - Standard eingerichtet ist und dass der dritte Funktionsblock (ALG) die Signalisierungsdaten nach dem Session Initiation Protokoll SIP und die enthaltenen Leitungsmerkmale in Signalisierungsdaten nach dem H.323 - Standard umsetzt, wobei die Leistungsmerkmale gemäß Standard H.323 und H.450 umgesetzt werden.

4. Multimedia-Gateway nach Anspruch 1 oder 2, **dadurch gekennzeichnet, dass** die Multimedia-Datenübertragung im ersten Computernetzwerk nach dem H.323-Standard erfolgt und der erste Funktionsblock als H.323 Gatekeeper dieses Protokoll unterstützt und der zweite Funktionsblock im zweiten Computernetzwerk als Teilnehmer an einer Multimedia-Datenübertragung nach dem Media Gateway Controller Protokoll MGCP-Standard eingerichtet ist und dass der dritte Funktionsblock die Signalisierungsdaten nach dem H.323/H.450- Protokollen und die enthaltenen Leitungsmerkmale in Verbindungssteuerungsdaten nach dem MGCP-Standard umsetzt.

5. Multimedia-Gateway nach Anspruch 1 oder 2, **dadurch gekennzeichnet, dass** die Multimedia-Datenübertragung im ersten Computernetzwerk nach dem Session Initiation Protokoll SIP erfolgt und der erste Funktionsblock als SIP Proxy dieses Protokoll unterstützt und der zweite Funktionsblock im zweiten Computernetzwerk als Teilnehmer an einer Multimedia-Datenübertragung nach dem Media Gateway Controller Protokoll MGCP-Standard eingerichtet ist und dass der dritte Funktionsblock die Signalisierungsdaten nach dem Session Initiation Protokoll SIP und die enthaltenen Leitungsmerkmale in Verbindungssteuerungsdaten nach dem MGCP-Standard umsetzt.
